# EUROPÄISCHE PATENTSCHRIFT

(11) **EP 3 209 463 B1**
(45) Veröffentlichungstag und Bekanntmachung des Hinweises auf die Patenterteilung: **26.09.2018**
(21) Anmeldenummer: 15777715.2
(22) Anmeldetag: 13.10.2015
(51) Int. Cl.: B25F 1/00, B23D 71/04, B23D 79/08

(54) **FLACHFEILE**
FLAT FILE
LIME PLATE

(30) Priorität: 23.10.2014 DE 202014008439 U
(43) Veröffentlichungstag der Anmeldung: 30.08.2017
(73) Patentinhaber: Georg Martin GmbH, 63128 Dietzenbach (DE)
(72) Erfinder: MARTIN, Christoph, 63128 Dietzenbach (DE)
(74) Vertreter: dompatent von Kreisler Selting Werner - Partnerschaft von Patent- und Rechtsanwälten mbB
(86) Internationale Anmeldenummer: PCT/EP2015/073718
(87) Internationale Veröffentlichungsnummer: WO 2016/062588

(56) Entgegenhaltungen:
- EP-A2- 0 934 790
- EP-A2- 0 953 412
- US-A1- 2014 216 605

## Beschreibung

Gegenstand der Erfindung ist eine Flachfeile, die geeignet ist, Folien von Zwischenlagen abzuheben.
Feilen sind bekanntermaßen mehrschneidige, spanende Werkzeuge zum Abtragen von Werkstoffen durch das Bearbeitungsverfahren Feilen. Aus Wikipedia, Stichwort "Feile" sind die verschiedensten Bestandteile einer Feile und die unterschiedlichen Formen von Feilen bekannt.

Ein Beispiel wird auch in der EP0953412A2 offenbart. Bei Zwischenlagen im Sinne der Erfindung handelt es sich um Produkte zum Unterlegen bei Maschinen mit dem Zweck eines Toleranzausgleichs, englisch "shims". Gemäß Wikipedia, Stichwort "Zwischenlagen" sind hier Produkte zum Unterlegen gemeint, die eine Fertigungstoleranz von mechanischen Komponenten ausgleichen und die Funktion der Spieleinstellung bei der Montage von mechanischen Bauteilen vereinfachen sollen. Durch den Einsatz von Zwischenlagen erübrigt sich eine maschinelle (Nach-) Bearbeitung, beispielsweise durch das Nachdrehen des Anschraubsflanschs oder nachträgliches Schleifen einer Distanzscheibe. Zwischenlagen gibt es in unterschiedlichen Ausführungen. Gemäß Wikipedia unterscheiden sie sich neben Herstellungsart und verwendeten Werkstoffen auch durch ihre Anwendungsmöglichkeiten. Zwischenlagen im Sinne der vorliegenden Erfindung umfassen insbesondere paketierten Zwischenlagen, bei denen einzelne Folien durch Verklebung an den Stirnseiten miteinander verbunden sind, wie dies beispielsweise bei der Verklebung von Buchrücken oder Abreißkalendern bekannt ist. In gleicher Weise umfassen die Zwischenlagen laminierte Zwischenlagen, bei denen die einzelnen Folien mit speziellen Klebstoffen ganzflächig oder teilflächig miteinander verklebt sind. Hierbei können die einzelnen Folien aus gleichen oder verschiedenen Materialien, insbesondere Metall oder Kunststoff bestehen.

Üblicherweise werden zum Abschälen von einzelnen oder mehreren Folien Handwerkzeuge wie beispielsweise Messer eingesetzt. Auf Grund der Messerschärfe und der üblicherweise vorhandenen Messerspitze bergen diese Werkzeuge ein nicht unbeträchtliches Gefahrenpotenzial.

Die Aufgabe der vorliegenden Erfindung besteht daher in der Bereitstellung eines gefahrlosen Werkzeugs zum Abschälen von Folien einer Zwischenlage.

In einer ersten Ausführungsform der Erfindung wird die sogenannte Aufgabe gelöst durch eine Flachfeile 1 mit einem Feilenheft 2, einer Feilenangel 3 und einem Feilenblatt 4, die dadurch gekennzeichnet ist, dass das Feilenblatt 4 einen Einhieb und/oder einen Kreuzhieb und/ oder einen Raspelhieb sowie ausgehend von einer ersten seiner Spitzen 5 anstelle der zweiten Spitze eine einseitige oder zweiseitige messerartige Schneidfase 6 mit einer Fehlschärfe 7 im Bereich der Schneidfase 6 aufweist.

Mit Hilfe der vorgenannten Flachfeile 1 wird ein Werkzeug zum Abschälen von Folien einer Zwischenlage zur Verfügung gestellt, das keine scharfen Kanten aufweist, und somit ein Werkzeug ohne maßgebliches Gefährdungspotenzial für den Anwender darstellt.

Ausgehend von einer handelsüblichen Flachfeile 1 mit einem Feilenheft 2, einer Feilenangel 3 und einem Feilenblatt 4, das einen Einhieb und/oder einen Kreuzhieb und/oder einen Raspelhieb aufweist wird erfindungsgemäß diese dahingehend modifiziert, dass diese im Bereich einer der beiden Spitzen 5 beispielsweise durch Abtragen eines Teils des Materials des Feilenblatts 4 so bearbeitet wird, dass eine einseitige oder zweiseitige messerartige Schneidfase 6 ausgebildet wird. Ein wesentliches Element dieser messerartigen Schneidfase 6 besteht darin, dass diese nicht zu einer scharfen Klinge bearbeitet ist, sondern darin, dass die Schneidfase 6 eine Fehlschärfe 7 aufweist. Diese Fehlschärfe 7 die vergleichbar ist mit der Schärfe eines handelsüblichen Spachtels sorgt dafür, dass beim Abheben von Folien einer Zwischenlage im Gegensatz zu einer handelsüblichen Feile genau die gewünschte Anzahl an Folien abgehoben werden kann, ohne dass hier ein Gefährdungspotenzial für den Anwender vorliegt.

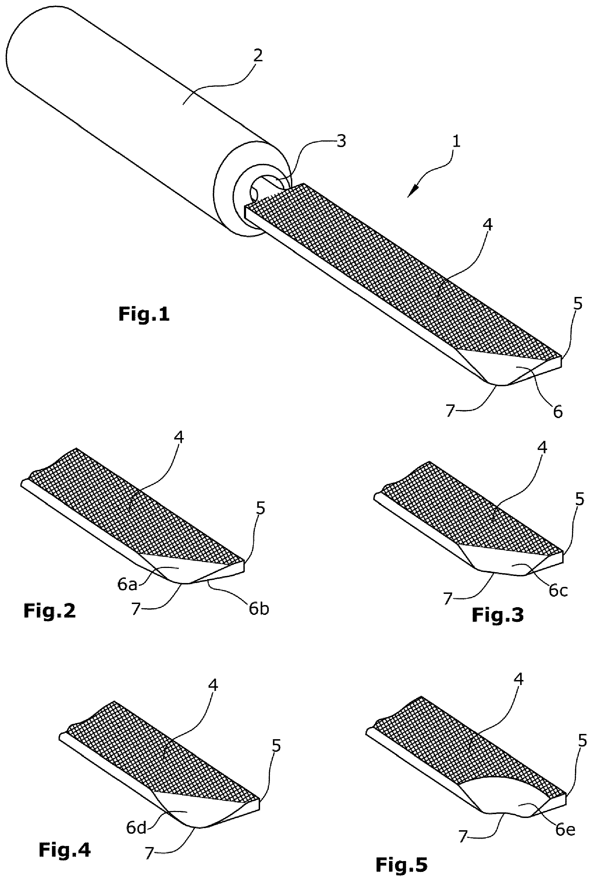

In der Fig. 1 wird eine erfindungsgemäße Flachfeile 1 dargestellt. Das Feilenblatt 4 steckt über die Feilenangel 3 in dem Feilenheft 2. Insofern handelt es sich um eine typische Flachfeile des Standes der Technik. In der Fig. 1 ist der erfindungsgemäße Bereich des Feilenblatts 4 dargestellt. Eine der beiden Spitzen 5 ist derart bearbeitet, dass eine Schneidfase 6 vorliegt, die eine Fehlschärfe 7 aufweist.
Dies kann beispielsweise durch einfaches Bearbeiten einer handelsüblichen Feile erfolgen.

Zum Abheben von Folien einer Zwischenablage wird mit dem Hieb der Feile 1 die oberste Schicht des Laminatteils, beispielsweise ein Ring 300x250x2,0 mm angekratzt und ganz leicht angehoben. Anschließend nimmt man die flache Seite der Spitze der Feile 1, das heißt die Schneidfase 6 mit der Fehlschärfe 7 und hebt mit dem spachtelförmigen Bereich der Schneidfase 6 die angehobene Folie weiter an. Damit ergibt sich nun eine angehobene Folie, die insbesondere bei dem oben genannten Laminatteil eine Linie auf dem Rand des Ringes bildet, wo sie noch mit dem Ring verbunden ist.

Diese linienförmige Verbindung mit dem Ring bedeutet beim weiteren Anschälen einer Vergrößerung der Linie und somit ansteigende Kräfte beim Schälen der Folie.

Nun gilt es im Weiteren die Schälkraft zu verringern durch den Einsatz der verbliebenden Spitze 5. Wie mit einem Reißzahn bricht man nun die Folie an der Stelle der linienförmigen Verbindung. Anschließend verwendet man erneut die Schneidfase 6, hebt unter einem Ende der durchtrennten Folie an und zieht nun entlang des Ringstegs die Folie ab. Die linienförmige Verbindung ist nun auf die 250 mm Ringstegbreite reduziert und das Schälen geht einfacher vonstatten.

Die Schneidfase 6 kann auf verschiedenste Art und Weise gestaltet werden.

Die einfachste Art der Herstellung der Schneidfase 6 besteht darin, dass die Flachfeile 1 mit einem Schleifmittel zur Herstellung einer ebenen Fläche bearbeitet wird. Diese ebene Fläche erstreckt sich mehr oder weniger diagonal ausgehen von einer teilweise oder vollständig entfernten Feilenspitze. Diese Schneidfase 6 weist eine Fehlschärfe 7 auf, so dass das Werkzeug keine scharfen Ecken aufweist.

Alternativ zu der einen Schneidfase 6 gemäß Fig. 1 kann die erfindungsgemäße Flachfeile 1 auch zwei Schneidfasen 6 aufweisen, wie in Fig. 2 dargestellt. Die entsprechenden Schneidfasen 6a, 6b können in einfacher Form aus einer handelsüblichen Feile herausgeschnitten werden. Dabei ist es nicht notwendigerweise erforderlich, dass die beiden Schneidfasen 6a, 6b identisch sind. Beispielsweise kann der Neigungswinkel der Schneidfase 6a von dem Neigungswinkel der Schneidfase 6b unterschiedlich ausgebildet sein.

In der Fig. 3 wird eine weitere Ausführungsform der vorliegenden Erfindung dargestellt, bei denen die Schneidfase 6c zwei "Spitzen" aufweist, die vorzugsweise auch abgerundet sind, damit ein Gefährdungspotenzial für den Anwender ausgeschlossen beziehungsweise minimiert werden kann.

In der Fig. 4 ist eine Ausführungsform der erfindungsgemäßen Feile dargestellt, bei der die Schneidfase 6d eine Freiformfläche aufweist. Diese Freiformfläche kann ebenso wie die vorgenannten geometrischen Flächen an eine bestimmte Art von Zwischenlagen angepasst sein, um hier besondere Vereinfachungen bei dem Abheben der Zwischenlagen zu erreichen.

In der Fig. 5 ist eine weitere alternative Ausführungsform der erfindungsgemäßen Flachfeile 1 dargestellt, beidem die Schneidfase 6e ein Segment eines kegelstumpfförmigen Körpers darstellt.

Auch hier ist es sinnvoll die an sich vorhandenen spitzen Ecken abzurunden.

Der Einsatz der oben definierten Flachfeile 1 gemäß der Erfindung ist weiter oben an einem Beispiel einer ringförmigen Zwischenlage beschrieben.

Dementsprechend ist die Verwendung einer entsprechenden Flachfeile 1 zum Abschälen von Folien einer Zwischenlage dadurch gekennzeichnet, dass man Verwendung einer Flachfeile 1 zum Abschälen von Folien einer Zwischenlage, wobei man
(a) mit dem Hieb eine oder mehrere Folien ankratzt und teilweise abhebt,
(b) anschließend mit der Schneidfase 6 die angehobene(n) Folie(n) weiter abhebt,
(c) anschließend mit der Spitze 5 die Folie(n) bricht und
(d) mit der Schneidfase 6 ein Ende der Folie(n) unterfasst und die Folie(n) abzieht.

## Patentansprüche

1. Flachfeile (1) mit einem Feilenheft (2), einer Feilenangel (3) und einem Feilenblatt (4), **dadurch gekennzeichnet, dass**
das Feilenblatt (4) einen Einhieb und/oder einen Kreuzhieb und/ oder einen Raspelhieb sowie
ausgehend von einer ersten seiner Spitzen (5) anstelle der zweiten Spitze eine einseitige oder zweiseitige messerartige Schneidfase (6) mit einer Fehlschärfe (7) im Bereich der Schneidfase (6) aufweist.

2. Flachfeile (1) nach Anspruch 1, **dadurch gekennzeichnet, dass** die Schneidfase (6) wenigstens eine ebene Fläche (6,6a,6b,6c) aufweist.

3. Flachfeile(1) nach Anspruch 1, **dadurch gekennzeichnet, dass** die Schneidfase (6) wenigstens eine Freiformfläche (6d) aufweist.

4. Flachfeile (1) nach Anspruch 1, **dadurch gekennzeichnet**, das die Schneidfase (6) wenigstens eine geometrische nicht ebene Fläche (6e) aufweist.

5. Flachfeile (1) nach Anspruch 1, **dadurch gekennzeichnet, dass** die Fehlschärfe (7) im Bereich der Schneidfase (6) von nicht spitzen, abgerundeten Ecken begrenzt ist.

6. Verwendung einer Flachfeile (1) gemäß Anspruch 1, zum Abschälen von Folien einer Zwischenlage, wobei man
(a) mit dem Hieb eine oder mehrere Folien ankratzt und teilweise abhebt,
(b) anschließend mit der Schneidfase (6) die angehobene(n) Folie(n) weiter abhebt,
(c) anschließend mit der Spitze (5) die Folie(n) bricht und
(d) mit der Schneidfase (6) ein Ende der Folie(n) unterfasst und die Folie(n) abzieht.

## Claims

1. A flat file (1) with a file handle (2), a file tang (3) and a file blade (4), **characterized in that**
said file blade (4) has a single-cut and/or a cross-cut and/or a rasp cut, and
proceeding from a first of its tips (5), instead of the second tip, has a one-sided or two-sided knife-like cutting bevel (6) with a ricasso (7) in the region of the cutting bevel (6).

2. The flat file (1) according to claim 1, **characterized in that** said cutting bevel (6) has at least one planar surface (6, 6a, 6b, 6c).

3. The flat file (1) according to claim 1, **characterized in that** said cutting bevel (6) has at least one freeform surface (6d).

4. The flat file (1) according to claim 1, **characterized in that** said cutting bevel (6) has at least one geometrical non-planar surface (6e).

5. The flat file (1) according to claim 1, **characterized in that** said ricasso (7) is bounded by non-acute, rounded corners in the region of the cutting bevel (6).

6. Use of a flat file (1) according to claim 1 for the peeling of films of a shim, wherein
(a) one or more films are slightly scratched with the cut and partially lifted off;
(b) the lifted-off film or films are subsequently lifted further with the cutting bevel (6);
(c) the film or films are subsequently broken with tip (5); and
(d) an end of the film or films is supported by the cutting bevel (6), and the film or films are peeled off.

## Revendications

1. Lime plate (1) comprenant un manche de lime (2), une soie de lime (3) et une lame de lime (4), **caractérisée en ce que**
la lame de lime (4) présente une taille simple et/ou une taille croisée et/ou une taille de râpe, et
en partant d'une première de ses pointes (5), au lieu de la seconde pointe, présente un biseau de coupe (6) analogue à un couteau sur un côté ou sur les deux côtés, avec un ricasso (7) dans la région du biseau de coupe (6).

2. Lime plate (1) selon la revendication 1, **caractérisée en ce que** le biseau de coupe (6) présente au moins une surface plane (6, 6a, 6b, 6c).

3. Lime plate (1) selon la revendication 1, **caractérisée en ce que** le biseau de coupe (6) présente au moins une surface à forme libre (6d).

4. Lime plate (1) selon la revendication 1, **caractérisée en ce que** le biseau de coupe (6) présente au moins une surface géométrique non plane (6e).

5. Lime plate (1) selon la revendication 1, **caractérisée en ce que** le ricasso (7) dans la région du biseau de coupe (6) est délimité par des angles non aigus, arrondis.

6. Utilisation d'une lime plate (1) selon la revendication 1 pour le décollement des feuilles d'une cale, dans laquelle
(a) une ou plusieurs feuilles sont affleurées et partiellement enlevées avec la taille,
(b) ensuite la ou les feuille(s) enlevées sont enlevées encore plus haut avec le biseau de coupe (6),
(c) ensuite la ou les feuille(s) sont rompues avec la pointe (5), et
(d) une extrémité de la ou des feuille(s) est saisie avec le biseau de coupe (6), et la ou les feuilles sont enlevées.
